# EUROPÄISCHE PATENTSCHRIFT

(11) **EP 0 473 940 B1**
(45) Veröffentlichungstag und Bekanntmachung des Hinweises auf die Patenterteilung: **01.03.1995**
(21) Anmeldenummer: 91112819.7
(22) Anmeldetag: 30.07.1991
(51) Int. Cl.: G01N 21/51

(54) **Fotometeranordnung mit Streulichtfalle**
Photometric device with scattering light trap
Dispositif photométrique avec piège à lumière diffusée

(30) Priorität: 07.08.1990 DE 4024954
(43) Veröffentlichungstag der Anmeldung: 11.03.1992
(73) Patentinhaber: BEHRINGWERKE Aktiengesellschaft, 35001 Marburg (DE)
(72) Erfinder: Gross, Jürgen, Dr., W-6238 Hofheim/Ts. (DE); Kressrer, Rudolf, W-6230 Frankfurt a.M. (DE)

(56) Entgegenhaltungen:
- CH-A- 459 609
- FR-A- 2 239 170
- GB-A- 2 157 428
- US-A- 3 420 609
- US-A- 4 152 070

## Beschreibung

Gegenstand der Erfindung ist eine Fotometeranordnung bestehend aus Lichtquelle, Linsensystem mit Strahlenteiler, Meßküvette, Streulichtfalle und Photodetektor, wobei die genannten Teile in dieser Reihenfolge angeordnet sind, zur Durchführung von Trübungsmessungen.

Fotometeranordnungen, bei denen zwischen Meßküvette und Photodetektor Blendensysteme als Streulichtfalle angeordnet sind, sind allgemein bekannt. Sie haben den Nachteil, daß zum Eingrenzen des Streuwinkels eine relativ große Baulänge des Blendensystems in der optischen Anordnung erforderlich ist, um Licht im Bereich von nur wenigen Graden zu messen und Streulicht untergrößeren Winkeln auszublenden. Der Winkel unter dem der verbleibende Streulichtanteil auf den Detektor gelangt, ist außerdem noch vom Entstehungsort in der Küvette abhängig.

Bei der Durchführung quantitativer Proteintests nach dem turbidimetrischen Verfahren, bei dem die Schwächung des Primärstrahls beim Durchgang durch die Meßküvette in der sich das Protein befindet, gemessen wird, entsteht gleichzeitig an den Präzipitaten bzw. den Latexagglutinaten gestreutes Licht. Durch den Anteil des Streulichtes in Vorwärtsrichtung entsteht am Photodetektor ein Signalbeitrag, der dem gewünschtem Meßsignal aus der konzentrationsabhängigen Abschwächung des Primärlichtes entgegenwirkt und die Empfindlichkeit der Meßmethode reduziert.

Hier will die Erfindung Abhilfe schaffen. Die Erfindung wie sie beansprucht ist, löst die Aufgabe dadurch, daß die Streulichtfalle aus einem Wabenkörper besteht, bei dem das Verhältnis des freien Querschnitts seiner einzelnen Kanäle zur Länge der selben 1 : 40 bis 1 : 300 beträgt.

Mit der Erfindung läßt sich der Streuwinkel in Vorwärtsrichtung auf ca. ± 1 Grad begrenzen, während das Primärlicht die Streulichtfalle nahezu vollständig, d.h. nach Maßgabe seiner Parallelität passiert. Durch die engen, parallellaufenden Kanäle des Wabenkörpers werden schräglaufende Strahlen, wie das Streulicht an den Kanalwänden reflektiert und bei entsprechender Rauhigkeit und/oder Farbgebung der Wände absorbiert. Der maximale Streuwinkel, unter dem ein Lichtstrahl auf dem Photodetektor gelangt, ist vom Querschnitt und der Länge einer Einzelkapillare des Wabenkörpers abhängig.

Im folgenden wird die Erfindung anhand von lediglich einem Ausführungsweg darstellender Zeichnung, die den schematischen Aufbau einer Fotometeranordnung zeigt, näher erläutert.

Das von einer Lichtquelle 1, z.B. einem Laser kommende Licht gelangt über ein Linsensystem, bestehend aus Kondensor 2, Strahlenteiler 3 und Linse 4 in die Meßküvette 5, die das Meßgut enthält. Der Primärstrahl tritt gegebenenfalls geschwächt aus der Küvette 5 aus und gelangt nach Passieren der Lichtfalle 6 auf den Photodetektor 7. Vom vorwärts gestreuten Licht kann nur noch ein unwesentlicher Anteil die Lichtfalle 6 passieren. So gelangt beispielsweise bei Verwendung eines Wabenkörpers von 56 mm Baulänge und 0,2 mm Wandstärke seiner 1 mm breiten Kanäle nurStreulichtaufden Photodetektor 7, dessen Streuwinkel weniger als ± 1 Grad von der optischen Achse abweicht; bei einer Baulänge von 22 mm beträgt der Streuwinkel weniger ais ±4 Grad. Die Lichtfalle, der Wabenkörper kann aus Keramik, Kunststoff oder Metall bestehen.

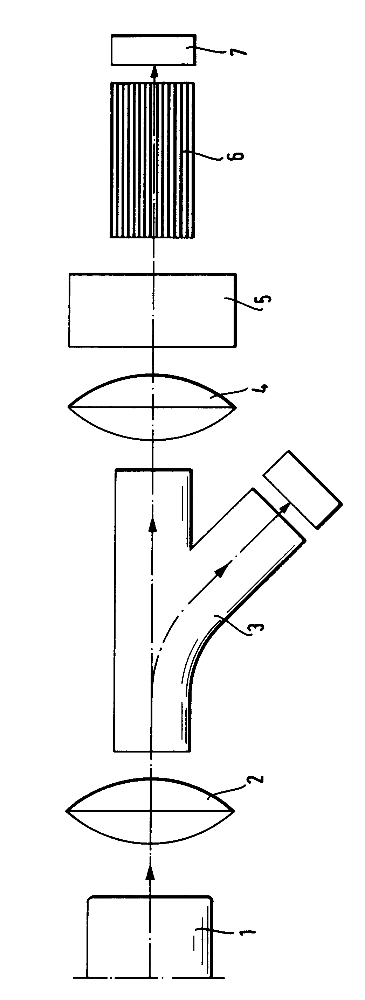

## Patentansprüche (Patentansprüche für folgende(n) Vertragsstaat(en) : AT, BE, CH, DE, DK, FR, GB, IT, LI, LU, NL, SE)

1. Fotometeranordnung bestehend aus Lichtquelle (1), Linsensystem (2,4) mit Strahlenteiler (3), Meßküvette (5), Streulichtfalle (6) und Photodetektor (7), wobei die genannten Teile in dieser Reihenfolge angeordnet sind, dadurch gekennzeichnet, daß die Streulichtfalle (6) aus einem Wabenkörper besteht, bei dem das Verhältnis des freien Querschnitts seiner einzelnen Kanäle zur Länge derselben 1 : 40 bis 1 : 300 beträgt.

## Patentansprüche (Patentansprüche für folgende(n) Vertragsstaat(en) : ES)

1. Verfahren zur Trübungsmessung, dadurch gekennzeichnet, daß eine Fotometeranordnung bestehend aus Lichtquelle (1), Linsensystem (2,4) mit Strahlenteiler (3), Meßküvette (5), Streulichtfalle (6)und Photodetektor (7), wobei die genannten Teile in dieser Reihenfolge angeordnet sind und die Streulichtfalle (6) aus einem Wabenkörper besteht, bei dem das Verhältnis des freien Querschnitts seiner einzelnen Kanäle zur Länge derselben 1 : 40 bis 1 : 300 beträgt, verwendet wird.

## Claims (Claims for the following Contracting State(s) : AT, BE, CH, DE, DK, FR, GB, IT, LI, LU, NL, SE)

1. A photometer arrangement comprising a light source (1), lens system (2, 4) with beam splitter (3), measurement cell (5), scattered light trap (6) and photodetector (7), said parts being arranged in this sequence, wherein the scattered light trap (6) comprises a honeycomb structure in which the ratio between the free cross section of its individual channels and the length thereof is from 1 : 40 to 1 : 300.

## Claims (Claims for the following Contracting State(s) : ES)

1. A process for measuring turbidity, which comprises using a photometer arrangement comprising a light source (1), lens system (2, 4) with beam splitter (3), measurement cell (5), scattered light trap (6) and photodetector (7), said parts being arranged in this sequence and the scattered light trap (6) comprising a honeycomb structure in which the ratio between the free cross section of its individual channels and the length thereof is from 1 : 40 to 1 : 300.

## Revendications (Revendications pour l'(les) Etat(s) contractant(s) suivant(s) : AT, BE, CH, DE, DK, FR, GB, IT, LI, LU, NL, SE)

1. Dispositif photométrique constitué par une source de lumière (1), un système de lentilles (2,4) comportant un diviseur de faisceau (3), une cuvette de mesure (5), un piège à lumière diffuse (6) et un photodétecteur (7), lesdits éléments étant disposés dans cet ordre, caractérisé en ce que le piège à lumière diffuse (6) est constitué par un corps en nid d'abeilles, dans lequel le rapport de la section transversale libre de ces canaux individuels à la longueur de ces canaux est compris entre 1:40 et 1:300.

## Revendications (Revendications pour l'(les) Etat(s) contractant(s) suivant(s) : suivant : ES)

1. Procédé de mesure de la turbidité, caractérisé en ce qu'on utilise un dispositif photométrique constitué par une source de lumière (1), un système de lentilles (2,4) comportant un diviseur de faisceau (3), une cuvette de mesure (5), un piège à lumière diffuse (6) et un photodétecteur (7), lesdits éléments étant disposés dans cet ordre et le piège à lumière diffuse (6) étant constitué par un corps en nid d'abeilles, et selon lequel le rapport de la section transversale libre des canaux individuels de ce corps à la longueur de ces canaux est compris entre 1:40 et 1:300.
